(19) Europäisches Patentamt
European Patent Office
Office européen des brevets

(11) **EP 3 839 795 A1**

(12) **DEMANDE DE BREVET EUROPEEN**

(43) Date de publication:
**23.06.2021 Bulletin 2021/25**

(51) Int Cl.:
**G06F 30/18** (2020.01)     *G06F 111/10* (2020.01)
**G06F 113/04** (2020.01)

(21) Numéro de dépôt: **20214202.2**

(22) Date de dépôt: **15.12.2020**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME
KH MA MD TN**

(30) Priorité: **19.12.2019 FR 1914900**

(71) Demandeur: **Commissariat à l'Energie Atomique
et aux Energies
Alternatives
75015 Paris (FR)**

(72) Inventeur: **GUILLOU, Hervé
38054 GRENOBLE CEDEX 09 (FR)**

(74) Mandataire: **Cabinet Camus Lebkiri
25 rue de Maubeuge
75009 Paris (FR)**

(54) **PROCÉDÉ D'OPTIMISATION DU MODÈLE PHYSIQUE D'UNE INSTALLATION ÉNERGÉTIQUE ET PROCÉDÉ DE PILOTAGE UTILISANT UN TEL MODÈLE**

(57)     Un premier aspect de l'invention concerne un procédé (100) de détermination d'un modèle physique d'une installation énergétique à partir d'une pluralité de composants reliés entre eux selon une ou plusieurs contraintes de sorte à former un arbre, dit arbre des contraintes, chaque composant comprenant un ou plusieurs ports de sortie, chaque port de sortie étant associé à une grandeur physique dont la valeur dépend d'une ou plusieurs variables internes au composant et/ou d'une ou plusieurs variables externes au composant, chaque variable externe étant communiquée au composant par un port d'entrée. Un deuxième aspect de l'invention concerne un procédé de pilotage d'une installation électrique comprenant une première phase de détermination d'un modèle physique de ladite installation à l'aide d'un procédé (100) selon un premier aspect de l'invention ; et une deuxième phase de pilotage durant laquelle chaque consigne est déterminée en fonction d'une simulation effectuée à l'aide du modèle physique obtenue lors de la phase de détermination d'un modèle physique de l'installation énergétique.

[Fig. 2]

**Description**

**DOMAINE TECHNIQUE DE L'INVENTION**

Le domaine technique de l'invention est celui de l'optimisation des installations énergétiques.

La présente invention concerne un procédé d'optimisation de l'utilisation d'une installation énergétique et en particulier un procédé permettant de minimiser le nombre de variables et de contraintes du modèle physique de l'installation énergétique dont on cherche à optimiser le fonctionnement en ligne. L'invention concerne également un procédé de pilotage utilisant un tel modèle.

**ARRIERE-PLAN TECHNOLOGIQUE DE L'INVENTION**

Lorsque l'on cherche à piloter une installation énergétique de manière optimale, il est nécessaire de pouvoir modéliser cette installation de sorte à anticiper, au moins de manière approximative, le fonctionnement des sources énergétiques qui la compose.

Des modèles physiques de composants énergétiques sont donc utilisés pour modéliser l'installation énergétique dans le but d'optimiser son fonctionnement sur un horizon anticipatif donné, par exemple sur les futures 24 heures, afin de générer les consignes optimales à appliquer pour chacun des composants énergétiques. Il est cependant nécessaire de faire des compromis sur la complexité des modèles utilisés pour déterminer, dans un temps raisonnable, les consignes de fonctionnement de ces composants énergétiques avant de pouvoir effectuer une simulation de l'installation énergétique. Le compromis ainsi fait a pour conséquences de devoir réduire la complexité des modèles de composants énergétiques utilisés, qui sont très complexes au vu du nombre de variables et de contraintes, ce qui oblige de réduire cette complexité et impacte la justesse des consignes de pilotage générées.

Il existe donc un besoin d'un procédé permettant d'obtenir un modèle physique précis tout en limitant au maximum les ressources de calculs nécessaires à sa mise en œuvre.

**RESUME DE L'INVENTION**

L'invention offre une solution aux problèmes évoqués précédemment, en permettant d'obtenir un modèle physique précis comportant un nombre de variables et de contraintes limité.

Pour cela, un premier aspect de l'invention concerne un procédé de détermination d'un modèle physique d'une installation électrique à partir d'une pluralité de composants reliés entre eux selon une ou plusieurs contraintes de sorte à former un arbre, dit arbre des contraintes, chaque composant comprenant un ou plusieurs ports de sortie et/ou d'entrée, chaque port étant associé à une grandeur physique dont la valeur dépend d'une ou plusieurs variables internes au composant et/ou d'une ou plusieurs variables externes au composants, chaque variable externe étant communiquée au composant par un port d'entrée ; ledit procédé comprenant :

- une étape d'attribution d'un niveau à chaque composant :

    ▪ les composants ne comportant que des ports de sortie, dit composant feuille sur l'arbre des contraintes, se voyant attribuer le niveau le plus faible ;
    ▪ les composants comportant un ou plusieurs ports d'entrée se voyant attribuer un niveau supérieur de un au niveau maximum des composants connecté sur ledit ou lesdits ports d'entrée ;

- une étape de détermination d'une pluralité de contraintes réduites comprenant, pour chaque niveau en partant du niveau le plus faible et pour chaque composant du niveau considéré :

    ▪ lorsque le composant est associé à une ou plusieurs variables internes, une sous étape de création de la ou des variables internes du composant ;
    ▪ lorsque le composant est associé à une ou plusieurs variables internes, une sous-étape de détermination de l'expression de chaque port de sortie dépendant d'au moins une variable interne du composant ;
    ▪ lorsque le composant comporte au moins un port d'entrée associée à au moins une variable externe, une sous-étape de détermination de l'expression de chaque port de sortie dépendant d'au moins une variable externe au composant ;
    ▪ une sous-étape de détermination des contraintes liant les variables internes du composant et les variables externes si elles existent de sorte à obtenir la ou les contraintes réduites associées au composant considéré.

La pluralité de contraintes réduites obtenue à l'issue du procédé selon un premier aspect de l'invention vient déterminer le modèle physique de l'installation électrique. Ainsi, partant d'une représentation du système énergétique donnée (exprimé sous la forme d'un arbre des contraintes) le nombre de variables et de contraintes régissant le modèle est réduit, ce qui réduit d'autant la complexité des calculs associée à l'utilisation d'un modèle obtenu à l'aide du procédé selon un premier aspect de l'invention. Ainsi, pour une même représentation d'un système énergétique (et donc une même précision dans les trajectoires de consigne obtenues), le procédé selon l'invention permet d'obtenir un modèle physique plus efficace que les méthodes utilisées antérieurement.

Par ailleurs, la détermination de contraintes réduites en partant du niveau le plus faible vers le niveau le plus élevé permet de conserver une dimension de problème analytique raisonnable au niveau global pouvant ainsi être résolu et optimisé au niveau global par des outils classiques. Cette résolution de niveau global assure l'obtention d'un optimum global qui est meilleur qu'une simple agrégation de solutions de sous-problèmes locaux. Autrement dit, le procédé selon l'invention permet de traiter le problème dans sa globalité et non en le subdivisant en sous-problèmes pour résoudre ensuite ces sous-problèmes de manière indépendante.

Un deuxième aspect de l'invention concerne un procédé de pilotage d'une installation énergétique comprenant une première phase de détermination d'un modèle physique de ladite installation à l'aide d'un procédé selon un premier aspect de l'invention ; et une deuxième phase de pilotage durant laquelle chaque consigne est déterminée en fonction d'une simulation effectuée à l'aide du modèle physique obtenue lors de la phase de détermination d'un modèle physique de l'installation électrique.

Un troisième aspect de l'invention concerne un programme d'ordinateur comprenant des instructions qui, lorsque le programme est exécuté par un ordinateur, conduisent celui-ci à mettre en œuvre le procédé selon un premier ou un deuxième aspect de l'invention.

Un quatrième aspect de l'invention concerne un support de données lisible par ordinateur, sur lequel est enregistré le programme d'ordinateur selon un troisième aspect de l'invention.

L'invention et ses différentes applications seront mieux comprises à la lecture de la description qui suit et à l'examen des figures qui l'accompagnent.

## BREVE DESCRIPTION DES FIGURES

Les figures sont présentées à titre indicatif et nullement limitatif de l'invention.

La [figure 1] représente un ordinogramme d'un procédé selon l'invention.
La [figure 2] montre une représentation schématique d'un premier système dont on cherche à déterminer le modèle physique.
La [figure 3] montre une représentation schématique d'un deuxième système dont on cherche à déterminer le modèle physique.

## DESCRIPTION DETAILLEE

Les figures sont présentées à titre indicatif et nullement limitatif de l'invention.

Un premier aspect de l'invention concerne un procédé 100 de détermination d'un modèle physique d'une installation énergétique à partir d'une pluralité de composants.

Afin de représenter l'installation énergétique, les composants sont reliés entre eux selon une ou plusieurs contraintes de sorte à former un arbre, dit arbre des contraintes. Un composant définit un objet contribuant à la production, à la consommation ou au transport (charge électrique, photovoltaïque, batterie, etc.), à la conversion (convertisseur, transformateur) ou bien alors un objet stratégique (régulateur). De plus, chaque composant comprend un ou plusieurs ports, chaque port étant associé à une grandeur physique dont la valeur dépend d'une ou plusieurs variables internes au composant et/ou d'une ou plusieurs variables externes au composant. Les variables internes sont soit des paramètres du composant, soit des données concernant le composant. En outre, il est possible de distinguer deux directions de ports : les ports entrants (ou IN) qui reçoivent un paramètre externe, et les ports sortants (ou OUT) qui fournissent un paramètre externe. De plus, à chaque port sont associés un identifiant et un type. Un arbre des contraintes comprend donc des composants reliés entre eux au niveau des ports en fonction de la direction desdits ports. Il est important de noter que plusieurs liaisons peuvent partir de ou arriver sur un même port. De plus, chaque liaison représente une contrainte entre les ports (c'est-à-dire entre les grandeurs physiques que représentent lesdits ports). Dans un mode de réalisation, chaque liaison peut être associée à une valeur seuil haute (upperBounds en anglais) et/ou une valeur seuil basse (lowerBounds en anglais) et représente un échange de puissance entre les différents composants. Comme nous le verrons dans la suite, le procédé selon l'invention permet de propager ces contraintes tout en minimisant le nombre de variables apparaissant dans le modèle ainsi obtenu.

Dans le procédé selon l'invention, l'arbre des contraintes est obtenu à partir de toute ou partie des données suivantes :

- les composants de l'installation énergétique identifiés par un nom et un type permettant d'identifier le composant (par ex. type photovoltaïque, type stockage, type convertisseur, etc.) ;
- chaque lien entre composant père (au niveau d'un port d'entrée) et composant fils (au niveau d'un port de sortie) ;
- les paramètres et les séries temporelles associés à chaque composant.

A partir de ces données, il est ensuite possible de construire les composants que comprend l'installation énergétique en se basant sur une bibliothèque des modèles. Puis, les nœuds sont instanciés (chaque nœud représentant un composant) et les liens entre les nœuds sont créés, lesdits liens connectant des composants père à des composants fils. Les nœuds ainsi reliés constituent l'arbre de contrainte utilisé dans le présent procédé pour déterminer un modèle de l'installation électrique.

De manière générale, les composants formant les feuilles de l'arbre de contraintes représentent des sources d'énergie (panneaux photovoltaïques, éoliennes, batteries, pile à combustible, etc.), ou des sources de consommation (bâtiments, etc.).

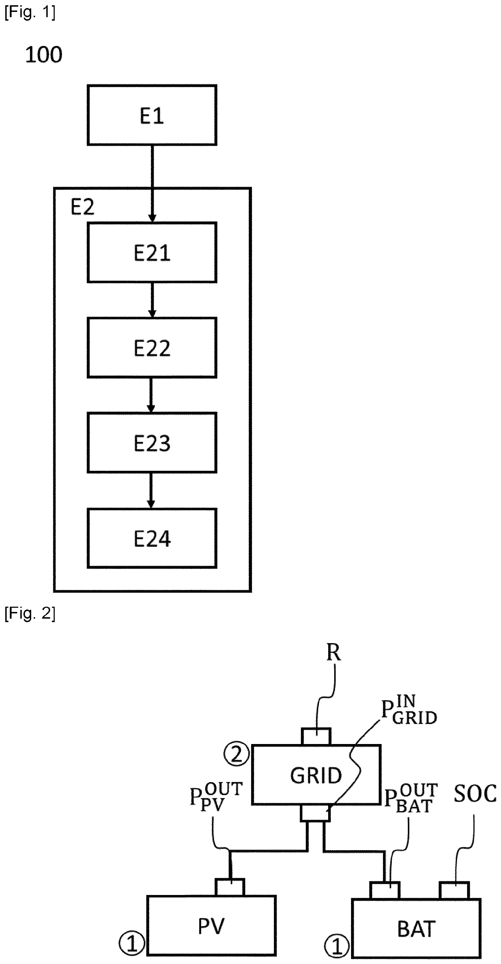

Pour les autres composants, la somme des valeurs fournies au niveau des ports d'entrée est égale à la somme des valeurs fournies au niveau des ports de sortie (traduisant ainsi les lois de conservation). D'autres contraintes peuvent bien entendu venir s'ajouter à la contrainte associée à la loi de conservation. Dans la suite, les différentes étapes du procédé seront illustrées à l'aide de l'exemple illustré en figure 2 et présentant une installation comprenant un composant photovoltaïque PV, un composant de stockage ESS et un composant réseau GRID.

Le procédé 100 selon l'invention comprend une étape E1 d'attribution d'un niveau à chaque composant : les composants ne comportant aucun port d'entré, dit composant feuille sur l'arbre des contraintes, se voyant attribuer le niveau le plus faible ; les composants comportant un ou plusieurs ports d'entrée se voyant attribuer un niveau supérieur de un (1) au niveau maximum des composants connectés sur ledit ou lesdits ports d'entrée. Dans la suite, sur les figures, les niveaux sont indiqués à l'aide de nombres cerclés situés sur le côté gauche de chaque composant. Dans l'exemple de la figure 2, le composant de stockage BAT et le composant photovoltaïque PV se voient attribuer le niveau 1 (un) tandis que le composant de réseau GRID se voit attribuer le niveau 2 (deux).

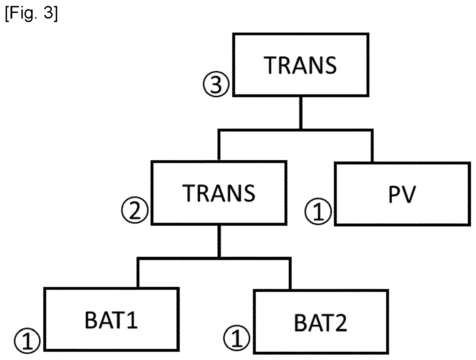

Un deuxième exemple plus complexe est illustré à la figure 3 et comprend un premier composant de stockage BAT1, un deuxième composant de stockage BAT2, un composant de transformation TRANS, un composant photovoltaïque PV et un composant de réseau GRID. Dans ce deuxième exemple, le premier et le deuxième composant de stockage BAT1, BAT2 ainsi que le composant photovoltaïque PV se voient attribuer le niveau 1. Le composant de transformation TRANS se voit quant à lui attribuer le niveau 2 puisqu'il est connecté à des composants de niveau 1. Le composant de réseau GRID se voit quant à lui attribuer le niveau 3, ce dernier étant connecté à des composants dont le niveau le plus élevé est égal à 2 (niveau correspondant au composant de transformation TRANS). On comprend donc ici que, en dehors des feuilles, le niveau d'un composant ne peut être que supérieur au niveau des composants connectés sur ses ports entrants.

Le procédé 100 selon l'invention comprend ensuite une étape E2 de détermination d'une pluralité de contraintes réduites. Cette étape comprend, pour chaque niveau (dans l'exemple de la figure 2, les niveaux un et deux) en partant du niveau le plus faible (dans l'exemple de la figure 2, le niveau un) et pour chaque composant du niveau considéré, les sous-étapes E21,E22,E23,E24 décrites ci-après.

Elle comprend, lorsque le composant est associé à une ou plusieurs variables internes, une sous-étape E21 de création de la ou des variables internes du composant. Dans l'exemple de la figure 2, durant cette sous-étape E21 les variables internes du composant photovoltaïque PV et du composant de stockage BAT sont tout d'abord créées, lesdits composants ayant le niveau le plus faible (ici 1). Le composant photovoltaïque comprend pour seule variable interne la production photovoltaïque notée $P_{PV}(t)$. Le composant de stockage comprend deux variables internes : l'état de charge noté $SOC(t)$, la puissance fournie (positive) ou absorbée (négative) $P_{BAT}(t)$.

Elle comprend également, lorsque le composant est associé à une ou plusieurs variables internes, une sous-étape E22 de détermination de l'expression de la valeur de chaque port de sortie dépendant d'au moins une variable interne au composant. Dans l'exemple de la figure 2, la valeur de l'unique port de sortie du composant photovoltaïque $P_{PV}^{OUT}(t)$ est donnée par la puissance produite $P_{PV}(t)$. Le composant de stockage comprend deux ports de sortie : un premier port de sortie associé à la puissance fournie ou absorbée $P_{BAT}^{OUT}$ données par $P_{BAT}(t)$, et un deuxième port de sortie associé à l'état de charge noté $SOC^{OUT}$.

Elle comprend aussi, lorsque le composant comporte au moins un port d'entrée associée à au moins une variable externe, une sous-étape E23 de détermination de l'expression de la valeur de chaque port de sortie dépendant d'au moins une variable externe au composant. Dans l'exemple de la figure 2, les composants de niveau 1 ne dépendent d'aucune variable externe. En revanche, le port d'entré du composant de niveau 2 dépend de la variable externe $P_{PV}^{OUT}$ donnée par le port de sortie du composant PV et de la variable externe $P_{BAT}^{OUT}$ donnée par le port de sortir du composant

$$P_{GRID}^{IN} = P_{PV}^{OUT} + P_{BAT}^{OUT}.$$

de stockage BAT de sorte que

Elle comprend également une sous-étape E24 de détermination des contraintes liant les variables internes du composant et les variables externes si elles existent de sorte à obtenir la ou les contraintes réduites associées au composant considéré. Dans l'exemple de la figure 2, les contraintes liées au composant PV ne dépendent que de ses variables internes : $0 \leq P_{PV}^{OUT}(t) \leq P_{FORECAST}(t)$ où $P_{FORECAST}$ est la puissance maximale qui peut être fournie compte tenu des prévisions météo. Concernant le composant stockage, les contraintes générées dépendent aussi que de ses variables internes : $\underline{P} \leq P_{BAT}(t) \leq P$ où $\underline{P}$ est la puissance maximale que le composant peut absorber et $P$ est la puissance maximale que le composant peut fournir, et $0 \leq SOC(t) \leq SOC$ où $SOC$ est l'état de charge maximum, sachant que $SOC(t) = SOC(t - \Delta t) + P_{BAT}(t) \times \Delta t$ où $\Delta t$ un intervalle de temps donné (qui correspond au pas de temps de la simulation utilisant un modèle déterminée à l'aide d'un procédé selon l'invention). Enfin, la contrainte liée au composant réseau GRID ne dépendent que de ses variables internes : $P_{min} \leq P_{GRID}^{IN} \leq P_{max}$ où $P_{min}$ est la puissance maximale soutirée depuis le réseau (autrement dit, la puissance minimale injectée sur le réseau) et $P_{max}$ est la puissance maximale injectée sur le réseau.

Dans l'exemple de la figure 2, les sous-étapes E21,E22,E23,E24 précédentes doivent être réitérées pour le composant de niveau 2, c'est-à-dire le composant réseau GRID. Pour le niveau 2, lors de la sous-étape E21 de création des variables internes du composant, aucune variable n'est créée, ledit composant n'en comportant pas. De même, lors de la sous-étape E22 de détermination de l'expression de la valeur de chaque port dépendant de variables internes au composant, aucune expression n'est déterminée, le composant réseau GRID ne comportant aucune variable interne. Lors de la sous-étape E23 de détermination de l'expression de la valeur de chaque port dépendant de variables externes au composant, le port d'entrée $P_{Grid}^{IN}$ est donnée par la somme de la puissance fournie par le composant photovoltaïque $P_{PV}(t)$ et la puissance fournie ou absorbée par le composant de stockage $P_{BAT}(t)$, $(P_{PV}(t) + P_{BAT}(t))$. Lors de la sous-étape E24, Le port de sortie du composant GRID le concernant le revenu R(t) est donné par $R(t) = P_{elec}(t) \times (P_{PV}(t) + P_{BAT}(t))\Delta t$ où $P_{elec}(t)$ est le prix de l'électricité sur la période $\Delta t$ considérée (qui correspond au pas de temps de la simulation utilisant un modèle déterminé à l'aide d'un procédé selon l'invention).

La pluralité de contraintes réduites ainsi obtenue vient déterminer le modèle physique de l'installation électrique.

Afin de pouvoir identifier les avantages d'un procédé 100 selon l'invention, Il peut être intéressant de reprendre l'exemple de la figure 2 et de lui appliquer un procédé selon l'état de la technique. Selon un tel procédé, les composants ne sont pas pris en compte en fonction de leur niveau dans l'arbre, mais sont au contraire considérés indépendamment, les contraintes étant prises en compte dans un second temps. Le composant photovoltaïque est donc représenté par $0 \leq P_{PV}(t) \leq P_{FORECAST}$. Le composant de stockage est quant à lui représenté par $\underline{P} \leq P_{BAT}(t) \leq P$ et $0 \leq SOC(t) \leq SOC$, sachant que $SOC(t) = SOC(t - \Delta t) + P_{BAT}(t) \times \Delta t$ où $\Delta t$ un intervalle de temps donné (qui correspond au pas de temps de la simulation utilisant un modèle déterminée à l'aide d'un procédé selon l'invention). Le composant réseau GRID est quant à lui représenté par $R(t) = P_{elec}(t) \times P_{GRID}(t) \Delta t$ où $P_{GRID}(t)$ est la puissance fournie par le réseau. Les contraintes sont ensuite prises en compte. Dans le cas de la figure 2, il est ensuite nécessaire d'imposer une contrainte $P_{GRID}(t) = P_{BAT}(t) + P_{PV}(t)$.

On constate donc que la mise en œuvre d'un procédé 100 selon l'invention permet de supprimer du modèle la variable $P_{GRID}(t)$ et la contrainte $P_{GRID}(t) = P_{BAT}(t) + P_{PV}(t)$. Le procédé 100 selon l'invention permet donc d'obtenir une formulation du modèle limitant le nombre de variables et le nombre de contraintes, c'est-à-dire l'obtention de contraintes réduites par leur nombre et réduites par le nombre de variables dans leurs expressions.

Le tableau 1 ci-dessous permet d'illustrer la différence en termes de temps de calcul pour un système électrique tel que présenté en figure 2 et en supposant une simulation de 24h avec un pas de temps de 1 minute.

[Tableau 1]

| | Modèle obtenu avec un procédé de l'état de la technique | Modèle obtenu avec un procédé selon un premier aspect de l'invention |
|---|---|---|
| Nombre de variables du modèle | 36000 | 10080 |
| Nombre de contraintes du modèle | 33120 | 7200 |
| Temps de simulation | 54 | 21 |

Un deuxième aspect de l'invention concerne un procédé de pilotage d'une installation énergétique. Le procédé comprend une première phase de détermination d'un modèle physique de ladite installation à l'aide d'un procédé 100 selon un premier aspect de l'invention. Ainsi, à l'issue de cette phase, l'on dispose d'un modèle comprenant un nombre minimal de variables et de contraintes, c'est-à-dire un modèle physique assurant un bon niveau de précision dans le calcul des trajectoire optimales de fonctionnement tout en limitant au maximum les ressources de calcul nécessaires à sa mise en œuvre.

Une fois le modèle obtenu, le procédé selon un deuxième aspect de l'invention comprend une deuxième phase de pilotage. Durant cette phase, chaque consigne est déterminée en fonction d'une simulation effectuée à l'aide du modèle physique obtenue lors de la phase de détermination d'un modèle physique de l'installation énergétique. De manière plus détaillée, une simulation du système est effectuée avec un horizon de temps donné, par exemple 24 heures, de sorte à identifier les consignes permettant d'obtenir un fonctionnement optimal de l'installation énergétique. Bien entendu, le modèle utilisé pour effectuer ces simulations est obtenu à l'aide d'un procédé selon un premier aspect de l'invention de sorte à obtenir des consignes (trajectoires) optimales à utiliser par les différents composants énergétiques en minimisant les ressources de calcul nécessaires à l'obtention de ces consignes. Une fois que les consignes optimales ont été obtenues, elles sont ensuite envoyées à l'installation énergétique. Le processus est ainsi répété pour chaque nouvelle consigne à une fréquence donnée, ladite fréquence étant fonction de la nature de l'installation énergétique (par exemple à chaque re-planification du fonctionnement de l'installation énergétique suite à une mise à jour des prévisions météo qui impact les prévisions du composant de production PV et du composant de consommation bâtiment).

**Revendications**

1. Procédé (100) de détermination d'un modèle physique d'une installation énergétique à partir d'une pluralité de composants reliés entre eux selon une ou plusieurs contraintes de sorte à former un arbre, dit arbre des contraintes, chaque composant comprenant un ou plusieurs ports de sortie, chaque port de sortie étant associé à une grandeur physique dont la valeur dépend d'une ou plusieurs variables internes au composant et/ou d'une ou plusieurs variables externes au composant, chaque variable externe étant communiquée au composant par un port d'entrée ; ledit procédé comprenant :

- une étape (E1) d'attribution d'un niveau à chaque composant :

   ▪ les composants ne comportant aucun port d'entré, dit composant feuille sur l'arbre des contraintes, se voyant attribuer le niveau le plus faible ;
   ▪ les composants comportant un ou plusieurs ports d'entrée se voyant attribuer un niveau supérieur de un au niveau maximum des composants connectés sur ledit ou lesdits ports d'entrée ;

- une étape (E2) de détermination d'une pluralité de contraintes réduites comprenant, pour chaque niveau en partant du niveau le plus faible et pour chaque composant du niveau considéré :

   ▪ lorsque le composant est associé à une ou plusieurs variables internes, une sous étape (E21) de création de la ou des variables internes du composant ;
   ▪ lorsque le composant est associé à une ou plusieurs variables internes, une sous-étape (E22) de détermination de l'expression de chaque port de sortie dépendant d'au moins une variable interne du composant ;
   ▪ lorsque le composant comporte au moins un port d'entrée associée à au moins une variable externe, une sous-étape (E23) de détermination de l'expression de chaque port de sortie dépendant d'au moins une variable externe au composant ;

■ une sous-étape (E24) de détermination des contraintes liant les variables internes du composant et les variables externes si elles existent de sorte à obtenir la ou les contraintes réduites associées au composant considéré.

2. Procédé de pilotage d'une installation énergétique comprenant une première phase de détermination d'un modèle physique de ladite installation à l'aide d'un procédé (100) selon la revendication précédente ; et une deuxième phase de pilotage durant laquelle chaque consigne est déterminée en fonction d'une simulation effectuée à l'aide du modèle physique obtenue lors de la phase de détermination d'un modèle physique de l'installation énergétique.

3. Programme d'ordinateur comprenant des instructions qui, lorsque le programme est exécuté par un ordinateur, conduisent celui-ci à mettre en œuvre le procédé (100) selon la revendication 1 ou la revendication 2.

4. Support de données lisible par ordinateur, sur lequel est enregistré le programme d'ordinateur selon la revendication 3.

[Fig. 1]

100

[Fig. 2]

[Fig. 3]

Europäisches
Patentamt

European
Patent Office

Office européen
des brevets

**RAPPORT DE RECHERCHE EUROPEENNE**

Numéro de la demande

EP 20 21 4202

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | MATTHEW A. WILLIAMS ET AL: "Dynamical Graph Models of Aircraft Electrical, Thermal, and Turbomachinery Components", JOURNAL OF DYNAMIC SYSTEMS, MEASUREMENT AND CONTROL, vol. 140, no. 4, 19 décembre 2017 (2017-12-19), XP055716943, US ISSN: 0022-0434, DOI: 10.1115/1.4038341 * abrégé * * figures 1, 11-15 * * equations 26, 27, 28, 29, 31, 33, 35 * * section 2.1, premier paragraphe * * section 4, troisième paragraphe * * section 4.2, dernier paragraphe * * section 6.1, dernier paragraphe * * sections 2, 2.1, 4, 4.1-4.4 * * le document en entier * ----- | 1-4 | INV. G06F30/18 ADD. G06F111/10 G06F113/04 |
| A | FR 3 058 804 A1 (COMMISSARIAT ENERGIE ATOMIQUE [FR]) 18 mai 2018 (2018-05-18) * abrégé * * revendication 1 * * le document en entier * ----- -/-- | 2 | DOMAINES TECHNIQUES RECHERCHES (IPC) G06F |

Le présent rapport a été établi pour toutes les revendications

| Lieu de la recherche | Date d'achèvement de la recherche | Examinateur |
|---|---|---|
| Munich | 9 avril 2021 | Joris, Pierre |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Europäisches
Patentamt

European
Patent Office

Office européen
des brevets

**RAPPORT DE RECHERCHE EUROPEENNE**

Numéro de la demande

EP 20 21 4202

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | KOELN JUSTIN P ET AL: "Hierarchical Control of Aircraft Electro-Thermal Systems", IEEE TRANSACTIONS ON CONTROL SYSTEMS TECHNOLOGY, IEEE SERVICE CENTER, NEW YORK, NY, US, vol. 28, no. 4, 12 avril 2019 (2019-04-12), pages 1218-1232, XP011793249, ISSN: 1063-6536, DOI: 10.1109/TCST.2019.2905221 [extrait le 2020-06-11] * abrégé * * figures 3, 6, 7 * * sections III.A, III.C, III.E * * le document en entier * ----- | 1-4 | |

DOMAINES TECHNIQUES
RECHERCHES (IPC)

Le présent rapport a été établi pour toutes les revendications

| Lieu de la recherche | Date d'achèvement de la recherche | Examinateur |
|---|---|---|
| Munich | 9 avril 2021 | Joris, Pierre |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
......................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 20 21 4202

09-04-2021

| Document brevet cité au rapport de recherche | Date de publication | Membre(s) de la famille de brevet(s) | Date de publication |
|---|---|---|---|
| FR 3058804 A1 | 18-05-2018 | EP 3321635 A2<br>FR 3058804 A1 | 16-05-2018<br>18-05-2018 |

EPO FORM P0460